# EUROPEAN PATENT APPLICATION

(11) **EP 1 801 805 A2**
(43) Date of publication of application: **27.06.2007**
(21) Application number: 06256477.8
(22) Date of filing: 20.12.2006
(51) Int. Cl.: G11B 27/10, H04N 5/445

(54) **A display apparatus for having a scheduling function to play recorded programs and a method thereof**

(30) Priority: 20.12.2005 KR 20050126133
(71) Applicant: LG Electronics Inc., Youngdungpo-Gu Seoul (KR)
(72) Inventor: Park, Chae Su, Jung-gu Daegu (KR)
(74) Representative: Cabinet Plasseraud

(57) **Abstract**

A display device having a scheduling function to play a recorded program and the method thereof is disclosed. A display device has a scheduling function to play a recorded program comprising a memory for storing the recorded program, a user interface for setting a scheduled time to play the recorded program, a time counter for comparing the scheduled time with a clock inside the display device, and a controller for playing the recorded program if the scheduled time matches with the clock inside the display device. Also, a method for scheduling to play a recorded program comprises storing the recorded program, setting a scheduled time to play the recorded program, comparing the scheduled time with a clock inside the display device, and playing the recorded program if the scheduled time matches with the clock inside the display device.

## Description

The present invention relates to a display device. It more particularly relates to a display device having a scheduling function to play recorded programs and method thereof.

Heretofore, broadcast programs have been recorded on a storage area for future viewing. However, increased numbers of recorded programs make it difficult to find and play a desired program at the time when the user wants.

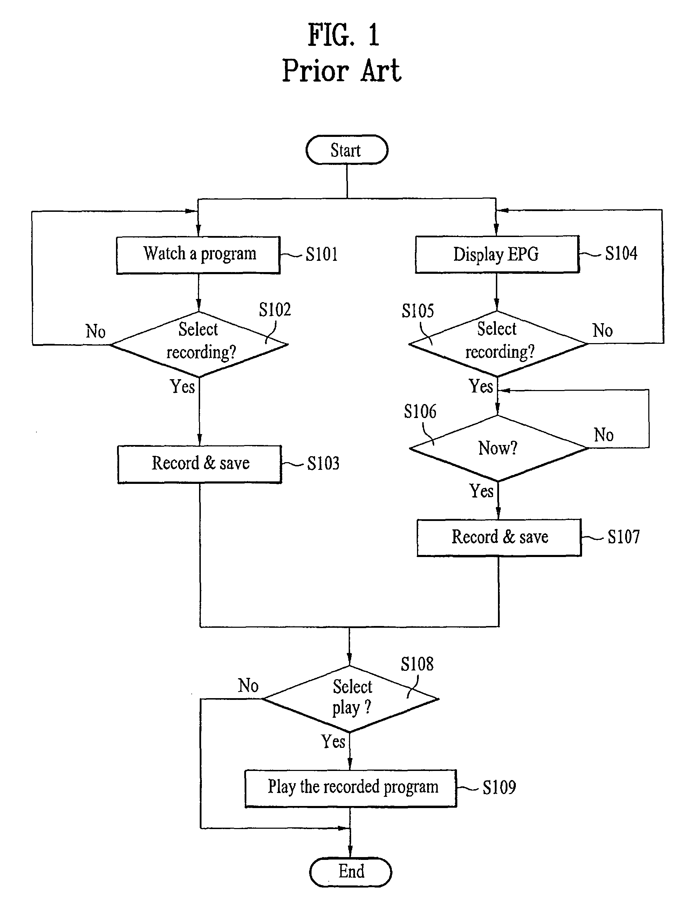

FIG.1 is a conventional flowchart for managing recorded broadcast programs. While watching a real time broadcast program (S101), the user decides if she records the program (S102). If she decides to record, she presses the record button using a user interface including a remote control, a keyboard, a mouse, a mechanical button, and a graphic user interface (GUI) (S103).

Alternately, while watching a real time broadcast program, she pushes a button for displaying an Electronic Program Guide (EPG) (S104) and select any one of the programs on the EPG list to schedule recording (S105). If she wants to record now (S106), then the broadcast program is recorded and saved (S107). Later time, only if the user wants to play one of the recorded programs (S 108), the recorded program is played (S 109). But, unless the user remembers the recording and intentionally finds and plays the recorded program, it is probable that the recorded program will become buried in lots of other recorded programs and/or deleted unintentionally without viewing.

Therefore, it is highly desired to develop a display device for having a scheduling function to play the recorded program when recording the broadcast program.

Accordingly, the present invention seeks to provide an improved display device having a scheduling function to play a recorded program and a method thereof.

Embodiments of the present invention can provide a more convenient user interface to the user by scheduling a later time to watch a recorded program while recording.

Additional advantages and features of the invention will be set forth in part in the description which follows and in part will become apparent to those having ordinary skill in the art upon examination of the following or may be learned from practice of the invention.

A first aspect of the invention provides a display device for having a scheduling function to play a recorded program comprising a memory for storing the recorded program, a user interface for setting a scheduled time to play the recorded program, a time counter for comparing the scheduled time with a clock inside the display device, and a controller for playing the recorded program if the scheduled time matches with the clock inside the display device.

Another aspect of the invention provides a method for scheduling to play a recorded program, comprising storing the recorded program, setting a scheduled time to play the recorded program, comparing the scheduled time with a clock inside the display device, and playing the recorded program if the scheduled time matches with the clock inside the display device.

It is to be understood that both the foregoing general description and the following detailed description of the present invention are exemplary and explanatory and are intended to provide further explanation of the invention as claimed.

Embodiments of the invention will now be described by way of non-limiting example only, with reference to the drawings, in which:

FIG.1 is a flowchart for managing broadcast programs of the conventional invention;

FIG. 2 illustrates a block diagram of a display device in accordance with an embodiment of the invention;

FIG. 3 illustrates an exemplary display screen for scheduling a replay setting in accordance with an embodiment of the invention;

FIG. 4 illustrates an exemplary display screen for confirming if the user really wants to play the scheduled program;

FIG. 5 illustrates a flowchart for managing broadcast programs in accordance with embodiments of the invention; and

FIG. 6 illustrates another flowchart for managing broadcast programs in accordance with embodiments of the invention.

Wherever possible, the same reference numbers will be used throughout the drawings to refer to the same or like parts.

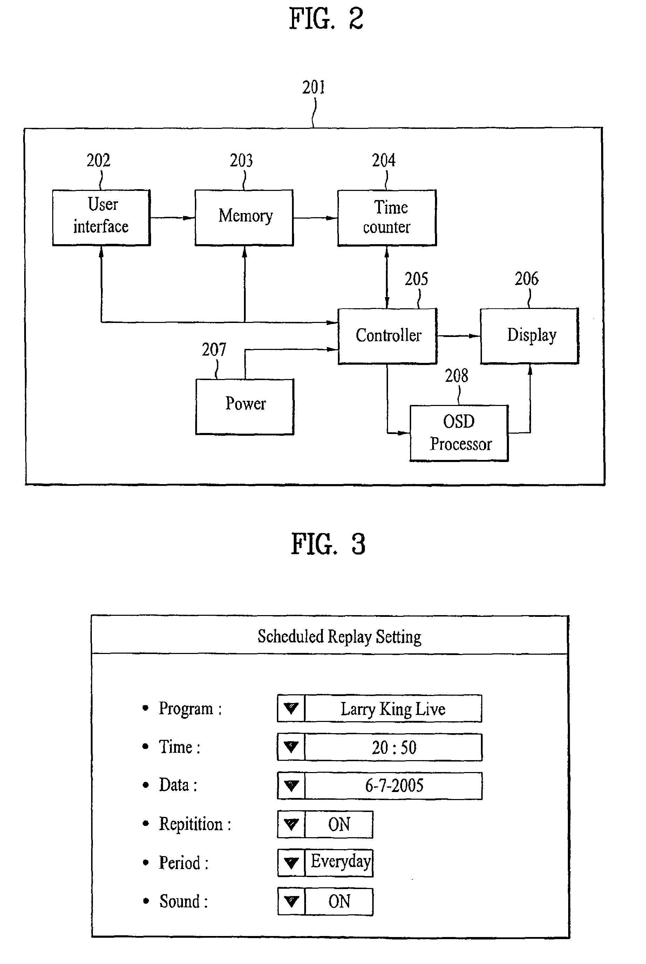

In FIG. 2, which shows an exemplary display device (201) having a scheduling function to play recorded programs, the conventional elements have been omitted. The display device (201) may for example include a digital television, a personal video recorder (PVR), a digital video recorder (DVR), and various formats of recording elements such as Hard Disk Drive (HDD), MD, Digital Video Drive (DVD)+R/-R, DVD+RW/-RW, a memory card, and Digital-Video Home System (D-VHS).

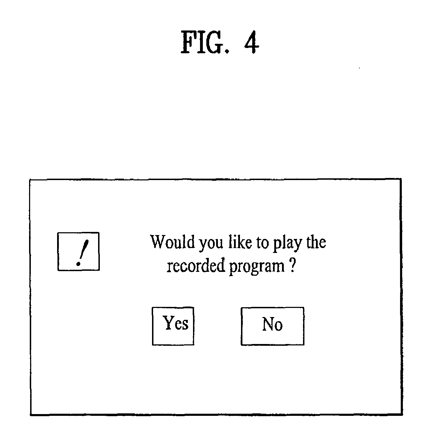

In the display device (201), a user inputs commands through the user interface (202) which includes a remote control, a keyboard, a mouse, a mechanical button, local keys attached in the device and a graphic user interface (GUI). While recording a real time broadcasting program, the user can set up when the recorded program will be played as shown in FIG 3. The user schedules time, date, repetition, repetition period, and sound of the program. The memory (203) stores recorded programs. The time counter (204) compares the scheduled time with the clock inside the display device (201). When the scheduled time matches the clock inside the display device (201), the OSD processor (208) generates such a question as shown in FIG. 4, and display at the display (206), asking for confirmation from the user to play the scheduled program, instead of just playing the scheduled program. In the present non-limiting example, possibilities for the OSD screen include Picture in Picture (PIP), Picture out Picture (POP) and a full screen. The controller (205) operates by getting its power from power unit (207) and controls all elements in the display device (201). The display (206) displays signals from the memory (203). Also, the On Screen Display (OSD) processor (208) outputs a menu, a list or a guide for the user.

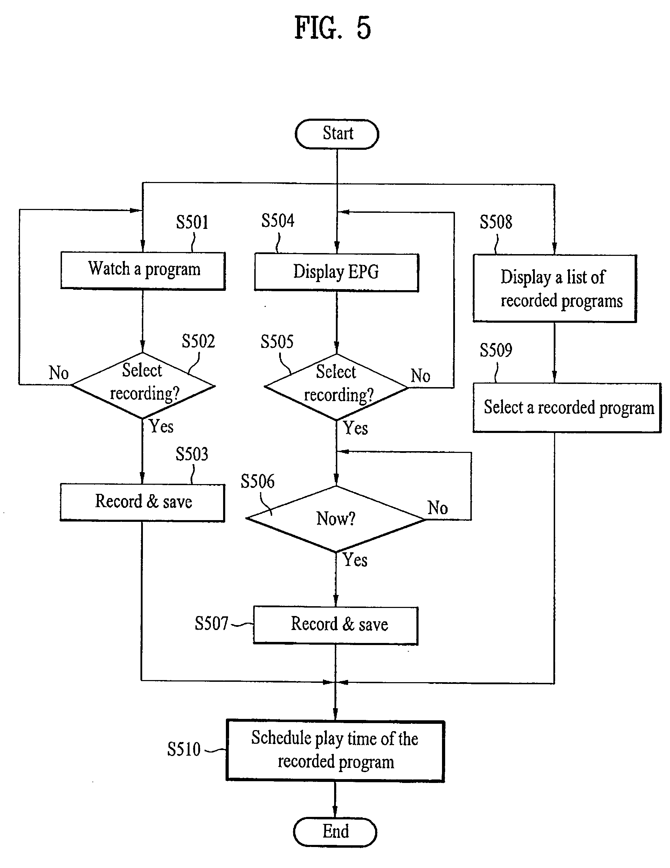

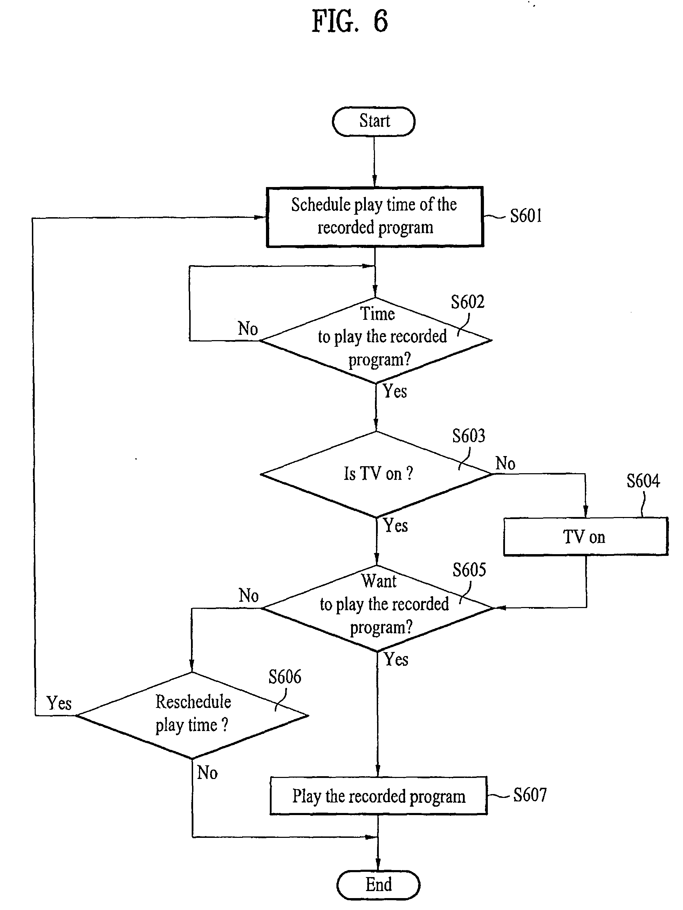

Now, operations for scheduling broadcast programs of the present embodiment will be explained with reference to FIG. 5, which shows that the recorded program is scheduled after having been saved at the memory (S510). Also, a list of recorded program is displayed using OSD screen (S508). By selecting one from the list, the user can schedule and/or reschedule to view the recorded program. FIG. 6 is a continuation from FIG. 5. S510 and S601 are the same step. When the play time comes, i.e. i the controller (205) asks if the display (206) is on (S603). If the display (206) is in the off state, the controller (205) turns the display (206) on. After the display has turned on, the OSD screen asks if the scheduled program should be played as shown in FIG. 4 (S605). If the user does not want to watch at that time, the controller (205) asks if the user wants to reschedule to play the recorded program (S606). If the user agrees to watch, the scheduled program is played (S607).

While embodiments of the invention have been described with respect to the embodiments constructed in accordance therewith, it will be apparent to those skilled in the art that various modifications, variations and improvements can be made without departing from the scope of the invention. Thus, it is intended that the invention covers modifications and variations of this invention provided they come within the scope of the claims.

## Claims

1. A display device having a scheduling function to play a recorded program comprising:
a memory arranged to store the recorded program;
a user interface arranged to set a scheduled time to play the recorded program;
a time counter arranged to compare the scheduled time with a clock inside the display device; and
a controller arranged to play the recorded program if the scheduled time matches with the clock inside the display device.

2. The display device of claim 1, further comprising a display arranged to display the recorded program.

3. The display device of claim 1, wherein the recorded program is arranged to be played at the same time every day or once a week.

4. The display device of claim 1, further comprising an On Screen Display (OSD) processor arranged to ask if the user wants to play the recorded program.

5. The display device of claim 4, wherein the user interface is one of a remote control, a keyboard, a mouse, a mechanical button, and a graphic user interface (GUI).

6. A method for scheduling to play a recorded program comprising:
storing the recorded program;
setting a scheduled time to play the recorded program;
comparing the scheduled time with a clock inside the display device; and
playing the recorded program if the scheduled time matches with the clock inside the display device.

7. The method of claim 6, further comprising displaying the recorded program.

8. The method of claim 7, wherein the recorded program is played at the same time every day or once a week.

9. The method of claim 7, further comprising asking if the user wants to play the recorded program.

10. The method of claim 9, wherein the user interface is one of a remote control, a keyboard, a mouse, a mechanical button, and a graphic user interface (GUI).
